# EUROPEAN PATENT APPLICATION

(11) **EP 4 029 374 A1**
(43) Date of publication of application: **20.07.2022**
(21) Application number: 22152287.3
(22) Date of filing: 19.01.2022
(51) Int. Cl.: A01N 25/30, A01P 3/00, A01P 13/00

(54) **NITROGEN CONTAINING SURFACTANTS FOR AGRICULTURAL USE**

(30) Priority: 19.01.2021 US 202117152091
(71) Applicant: Nouryon Chemicals International B.V., 6824 BM Arnhem (NL)
(72) Inventor: ZHU, Shawn, 7418 AJ Deventer (NL); JURS, Joshua, 7418 AJ Deventer (NL); BAND, Elliot Isaac, 7418 AJ Deventer (NL); WALTERS, Michael, 7418 AJ Deventer (NL)
(74) Representative: LKGlobal UK Ltd.

(57) **Abstract**

An agricultural formulation comprises:
at least one agricultural active; and
an alkyl imino dipropionate having the formula: 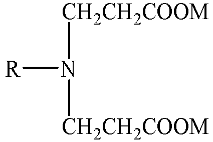 wherein R is a C6 - C24, linear or branched, alkyl group, and wherein each M is independently a cation chosen from Mg²⁺, Ca²⁺, NH₄ ⁺, K⁺, and Na⁺, and
wherein the formulation is free of an alkylamine and/or derivative thereof if R is lauryl.

## Description

### FIELD OF THE DISCLOSURE

The present disclosure generally relates to nitrogen containing surfactants as adjuvants that enhance the activity of agricultural formulations.

### BACKGROUND

The bioefficacy of pesticides is known to be enhanced by the addition of appropriate surfactants, or adjuvants. For example, it is well known that the bioefficacy of glyphosate, a herbicide, can be enhanced by tallowamine ethoxylate surfactant. However, some commonly used surfactants have unfavorable aquatic toxicity or eye irritation profiles. Examples of such surfactants are, tallowamine ethoxylate, C14 alcohol ethoxylate (1-4 EO), and C18 alkyl trimethyl quaternary surfactants. Many attempts have been tried to replace such surfactants with one having better aquatic toxicity or eye irritation profiles. Any improvement in terms of aquatic or eye irritation will be seen as a step forward in the right direction to protect the environment. However, it is well known to those skilled in the art that improvement in aquatic toxicity or eye irritation usually go in the opposite direction of improvement in bioefficacy. One example was that, in an attempt to replace the tallowamine ethoxylate in glyphosate, alkyl poly glucoside (APG) surfactant was introduced as a mild surfactant having as good an efficacy enhancing property as tallowamine ethoxylate but it was later proved that APG surfactants were actually weak in enhancing glyphosate bioefficacy. Until now there has not been found any surfactants which can enhance glyphosate efficacy as well as tallowamine ethoxylate does while at the same time have low aquatic toxicity and eye irritation profiles. Glyphosate is the largest volume pesticide in the world. Therefore, there is a need to find a suitable surfactant having good bioefficacy enhancing property, improved aquatic toxicity, and improved eye irritation profiles for general pesticide use, and particularly for glyphosate use.

U.S. Patent No. 6645912 discloses a herbicide composition with a 2-nitrgen amidoamine di-C1-C4 alkyl amine oxide of the formula: 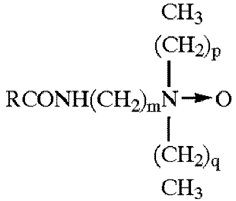 wherein R is C6-C20, m = 1-4, and p and q = 0-3.

WO29082675A1 discloses a composition comprising an amidoamine alkoxylate of the formula: 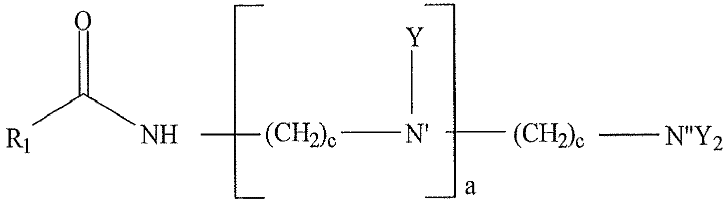 wherein a = 1-3; c=2-3; R1 = C5 to C19 alkyl radical and wherein Y is each independently: H, 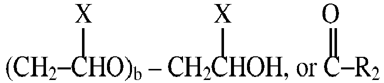 wherein X is independently H, CH3, or C2H5, b = 0-10, and R2 is C5-C19 radical. Where at least one of the N' and N" is oxidized or quaternized. However, this type of amidoamine, its oxide and quaternary compounds have been well known for many years.

WO2009080225A2 discloses an adjuvant composition for an agrochemical formulation comprising a salt of N-lauryl iminopropinoic acid and an alkylamine derivative with the general structure: 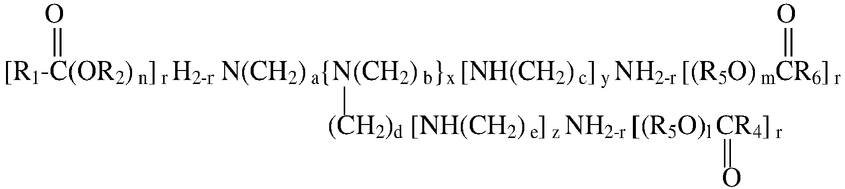 wherein R₁, R₄, and R₆ each independently represents hydrogen or a C₁₋₃₀ alkyl or alkenyl group; (OR₂)n, (OR₃)₁, and (OR₅)ₘ each independently represents a random polyalkoxide group, a block polyalkoxide group, or a C2-6 linear or branched, alkyl sulf(on)ate; R₂, R₃, and R₅ each independently represents a C2-6 alkyl group; l, m, and n, each independently represents a number from 1 to 100, r represents a number from 1 to 2; a, b, c, d, and e each independently represents a number from 1 to 12; and each of x, y, and z independently represent a number from 1 to 100.

The alkylamine derivatives suitable for the adjuvant compositions according to the document include, but not limited to: monoethanolamine, diethanolamine, triethanolamine, and a polyaliphatic amine and/or its derivatives. It is claimed that the composition has reduced eye and skin irritation but no actual data is disclosed. It is also claimed that the composition provided weed control equal to the standard Roundup^{®} Ultra using three examples of 360 g/l IPA-glyphosate formulations.

WO2009080225A2 does not disclose, teach, or suggest use of the salt of N-lauryl iminopropinoic acid, without the use of the alkylamine derivatives, to form an effective composition. Moreover, no actual bioefficacy data and especially no data are provided on the degree of "overall kill" such that it is not possible to determine whether the claimed alkyl amido betaine was effective in enhancing herbicidal activity of glyphosate under the conditions of the test reported. Moreover, WO2009080225A2 does not disclose whether the salt of N-lauryl iminopropinoic acid is compatible in other salts of glyphosate such as high load ammonium and potassium glyphosate formulations.

WO2000038523 (Huntsman, US6500784, US6653257, EP1139761) discloses an amphoteric surfactant with the structure RCONH(CH2)ₙ N⁺R¹₂CH₂COO- wherein R1 is alkyl or hydroxyl alkyl group with C1 to C4 and n = 2 - 4, and discloses a betaine with the structure R R¹₂N⁺CH₂COO- wherein R1 is alkyl or hydroxyl alkyl group with C1 to C4. The amphoterics disclosed there mainly functioned as a co-surfactant to solubilize a ether carboxylate in to concentrated glyphosate systems. In the context of the document, there was no mention of bioefficacy of betaines or other amphoteric surfactants by themselves. Only in examples 29 -53 a mixture of three surfactants (not betaine alone) was mentioned to exhibit an improved wetting and bioefficacy. However, without proper testing of individual surfactant, it is not possible to determine whether the effect seen in the mixture of three surfactants comes from the claimed surfactant or the other two surfactants. Moreover, no actual bioefficacy data and especially no data are provided on the degree of "overall kill" provided in the absence of surfactants and in the presence of surfactants; without such data it is not possible to determine whether or not the claimed alkyl amido betaine was effective in enhancing herbicidal activity of glyphosate under the conditions of the test reported. This patent requires Na ion to be < 0.035% for the glyphosate formulation to be stable. Moreover, it used only IPA-glyphosate as examples. It is only recently known that many soluble surfactants in IPA-glyphosate are not soluble in concentrated K or NH4 glyphosate formulations. Our tests indicated that a composition of 51.3% potassium glyphosate, an un-saturated glyphosate salt aqueous solution, could not even dissolve 1.8% stearyl dimethylamidopropyl betaine. Since stearyl dimethylamidopropyl betaine itself had poor solubility in concentrated potassium glyphosate system, it is expected that the solubility of stearyl dimethylamidopropyl betaine plus ether carboxylate would be even worst in the concentrated potassium glyphosate system. Therefore, the claimed formulation in claim 1 in the document may not be stable, that is not useful, in a concentrated K glyphosate system.

US2004/0224846A1 (US 6992046B2) claims a glyphosate formulation with a trialkyl betaine (or trialkyl amido propyl betaine) plus at least one alkylamine alkoxylate. No data are provided on the degree of "overall kill" provided in the absence of surfactants and in the presence of surfactants; without such data it is not possible to determine whether or not the mixture of trialkyl betaine (or trialkyl amido propyl betaine) and alkylamine alkoxylate was effective in enhancing herbicidal activity of glyphosate under the conditions of the test reported. Moreover, since alkylamine alkoxylate alone is effective in enhancing glyphosate efficacy, it is not possible to tell from the context of the document whether or not the effect cited in the document was from the alkylamine alkoxylate, the betaine, or combination of both.

US 20050170965(A1) (Rhodia) (WO 03/063589 A2, EP1469731A2, US2003/0158042, US2004/0224846, EP2025230) discloses a betaine with following structures and at least one more surfactant which includes alkylamine ethoxylate. 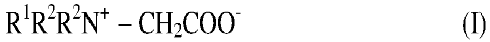 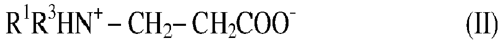 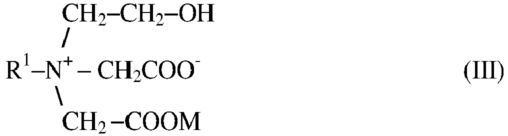 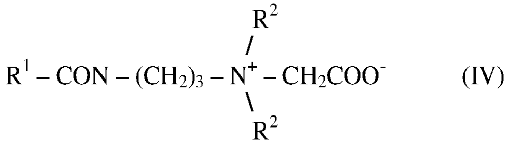 wherein R² is alkyl, and R³ is hydrogen, alkyl or -CH₂-COOM.

In the context of US 20050170965, no data are provided on the degree of "overall kill" provided in the absence of surfactants and in the presence of surfactants; without such data it is not possible to determine whether or not the mixture of trialkyl betaine (or trialkyl amido propyl betaine) and alkylamine alkoxylate was effective in enhancing herbicidal activity of glyphosate under the conditions of the test reported. Moreover, since alkylamine alkoxylate alone is effective in enhancing glyphosate efficacy, it is not possible to tell from the context of the document whether or not the claimed effect was from the alkylamine alkoxylate, the betaine, or combination of both.

US 20050170965 also indicates the aqueous glyphosate formulation is stable on storage. However, it is only recently known that many stable surfactants in IPA-glyphosate are not soluble in concentrated K or NH4 glyphosate formulations. Tests indicate that a composition of 360 g ae/l di-ammonium glyphosate could not dissolve 5.4% coco dimethyl betaine and a composition of 480 g ae/l potassium glyphosate could not dissolve 5.4% coco dimethylamidopropyl betaine. Since coco dimethyl betaine and coco dimethylamidopropyl betaine had poor solubility in concentrated potassium and di-ammonium glyphosate systems, it is expected that the claimed formulation in claim 16 of the document may not be stable in concentrated K or NH4 glyphosate systems.

US20080312083 (Rhodia PTC filed in 2005) discloses glyphosate with a betaine of the structure R¹R²R²N⁺-CH₂COO⁻ (I) or R¹-CO-NH-R⁴-R²R²N⁺-CH₂COO⁻wherein R¹ is C3 - C30 and R² is C1 - C3. A herbicidal aqueous composition is illustrated, comprising: (i) at least 360 g/L of an aminophosphate or aminophosphonate salt; (ii) at least 80 g/L of a surfactant system which comprises: a betaine surfactant composition comprising: water, a betaine having the formula R¹R²R²N⁺-CH2COO⁻, wherein: R¹ is a linear or branched hydrocarbon radical having 3 to 30 alkoxide units the radicals R², which may be identical or different, are each a C₁-C₃ alkyl radical, at least 1% by weight of a chloride salt, and (iii) optionally, at least one surfactant other than the betaine of the betaine surfactant composition. The document states that the examples show that the composition according to the disclosure have a surprising good stability, without crystals formation. Meanwhile the compositions according to the examples have a better (lower fresh weight) and/or quicker bio-efficacy (higher brownout) on at least some significant weeds (annual ryegrass and wild radish). No data are provided on the degree of "overall kill" provided in the absence of surfactant and in the presence of surfactants; without such data it is not possible to determine whether or not the trialkyl betaine (or trialkyl amido propyl betaine) was effective in enhancing herbicidal activity of glyphosate under the conditions of the test reported. The document states that the examples show that the composition according to the disclosure have a surprising good stability, without crystals formation. Tests indicate that a composition of 360 g ae/l potassium glyphosate could not dissolve 80 g/l coco dimethylamidopropyl betaine.

WO2008066611 (Rhodia, Canadian patent 2629862) claims an surfactant blend of surfactants selected from any two of the groups: (1) alkylpolyglucoside, (2) phosphate ester, (3) sulfonate, sulfosuccinate, alkyl ether carboxylate, alkoxylated fatty acid, alkoxylated alcohol, and (4) imidazoline based surfactant or a aminopropionate based surfactant. No biological data is shown.

Eco toxicity of a chemical is classified according to the Directive 91/325/EEC [2] as well as 1999/45/EC. Limits are specified for the application of risk phrases and the "N" symbol (sometimes shown as dead-fish-dead-tree symbol). Possible combinations are as follows:

| | |
|---|---|
| Symbol | Risk phrase |
| N | R 50/53 |
| N | R 50 |
| N | R 51/53 |
| - | R 52/53 |
| - | R 52 |
| - | R 53 |

The risk phrases have the following meaning:
R 50: Very toxic to aquatic organisms
R 51: Toxic to aquatic organisms
R 52: Harmful to aquatic organisms
R 53: May cause long term adverse effects in the aquatic environment

### BRIEF SUMMARY

This disclosure provides an agricultural formulation comprising:
at least one agricultural active; and
an alkyl imino dipropionate having the formula: 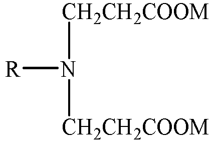
wherein R is a C6 - C24, linear or branched, alkyl group, and wherein each M is independently a cation chosen from Mg²⁺, Ca²⁺, NH₄ ⁺, K⁺, and Na⁺, and
wherein the formulation is free of an alkylamine and/or derivative thereof if R is lauryl.

This disclosure also provides an agricultural formulation comprising:
an herbicide chosen from glyphosate, glufosinate, and combinations thereof; and
an alkyl imino dipropionate having the formula: 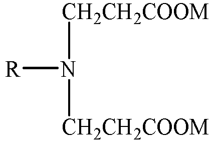
wherein R is 2-ethylhexyl and wherein each M is Na⁺.

This disclosure further provides an agricultural formulation comprising:
azoxystrobin; and
an alkyl imino dipropionate having the formula: 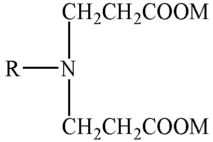
wherein R is 2-ethylhexyl and wherein each M is Na⁺.

### BRIEF DESCRIPTION OF THE DRAWINGS

The present disclosure will hereinafter be described in conjunction with the following drawing Figures, wherein like numerals denote like elements, and
FIG. 1 is a bar graph illustrating the % control results of applying the glyphosate samples of Table 1 at 186g ae/ha to morning glory at 7, 14, 21 and 29 days after treatment.
FIG. 2 is a bar graph illustrating the % control results of applying the glyphosate samples of Table 1 at 372 g ae/ha to morning glory at 7, 14, 21 and 29 days after treatment.
FIG. 3 is a bar graph illustrating the % control results of applying the glyphosate samples of Table 1 at 743g ae/ha to morning glory at 7, 14, 21 and 29 days after treatment.
FIG. 4 is a bar graph illustrating the % control results of applying the glyphosate samples of Table 1 at 186g ae/ha to wheat at 7, 14, 21 and 29 days after treatment.
FIG. 5 is a bar graph illustrating the % control results of applying the glyphosate samples of Table 1 at 372 g ae/ha to wheat at 7, 14, 21 and 29 days after treatment.
FIG. 6 is a bar graph illustrating the % control results of applying the glyphosate samples of Table 1 at 743g ae/ha to wheat at 7, 14, 21 and 29 days after treatment.
FIG. 7 is a bar graph illustrating the % control results of applying the glyphosate formulations of Table 3 at 489g ae/ha and 978g ae/ha to morning glory at 28 days after treatment.
FIG. 8 is a bar graph illustrating the % control results of applying the glyphosate formulations of Table 3 at 489g ae/ha and 978g ae/ha to wheat at 28 days after treatment.
FIG. 9 is a bar graph illustrating the % control results of applying glyphosate formulation containing oleylamphopolycarboxy glycinate, glyphosate formulation containing tallowamine-10EO, and glyphosate alone, each at 233g ae/ha, 465g ae/ha, and 930g ae/ha to morning glory at 28 days after treatment.
FIG. 10 is a bar graph illustrating the % control results of applying glyphosate formulation containing oleylamphopolycarboxy glycinate, glyphosate formulation containing tallowamine-10EO, and glyphosate alone, each at 233g ae/ha, 465g ae/ha, and 930g ae/ha to wheat at 28 days after treatment.
FIG. 11 is a bar graph illustrating the % control results of applying the glyphosate samples of Table 4 at 186g /HA, 372 g/HA, and 744 g/HA to morning glory at 28 days after treatment.
FIG. 12 is a bar graph illustrating the % control results of applying the glyphosate samples of Table 4 at 186g /HA, 372 g/HA, and 744 g/HA to wheat at 28 days after treatment.
FIG. 13 is a photo of wheat taken at 21 days after treatment with glyphosate alone, glyphosate with tallowamine-15EO, glyphosate with cocoamine-6EO betaine, and no glyphosate.

### DETAILED DESCRIPTION

The following detailed description is merely exemplary in nature and is not intended to limit the agricultural formulation. Furthermore, there is no intention to be bound by any theory presented in the preceding background or the following detailed description.

Embodiments of the present disclosure are generally directed to agricultural formulation and methods for forming the same. For the sake of brevity, conventional techniques related to agricultural formulation may not be described in detail herein. Moreover, the various tasks and process steps described herein may be incorporated into a more comprehensive procedure or process having additional steps or functionality not described in detail herein. In particular, various steps in the manufacture of agricultural formulations are well-known and so, in the interest of brevity, many conventional steps will only be mentioned briefly herein or will be omitted entirely without providing the well-known process details.

In various embodiments, the present disclosure generally relates to nitrogen containing surfactants with a N⁺-CH₂COO⁻, N⁺-CH₂COOCH₃, N-CH₂COO⁻ M⁺, N-CH₂CH₂COO⁻M⁺, or amine oxide functionality which enhance the efficacy of agricultural formulations. Some of the surfactants of the present disclosure are compatible in high load ammonium and potassium glyphosate formulations with or without a compatibility agent.

In one embodiment, the present disclosure is a surfactant useful for enhancing the efficacy of agricultural formulations comprising the following general structure: 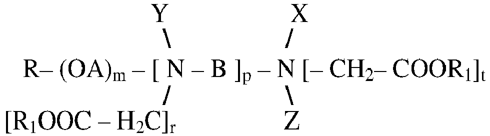 wherein R is C6 - C22 linear or branched, saturated or non-saturated hydrocarbon group; A = C1 - C3 linear or branched alkyl; m = 0 - 10; B = C2 - C6 alkyl; p = 0 - 5; r = 0- 1; t = 0-1; R₁ is nothing, hydrogen or CH₃ and the whole molecule has a chloride as the counter ion for each hydrogen or CH₃ when R₁ is hydrogen or CH₃; X and Y independently are nothing (or a pair electron), H (hydrogen), CH₃ (methyl), a polyalkoxide group with 1 to 20 alkoxide units, CH₂COO, CH₂COO⁻M⁺ or CH₂CH₂COO⁻M⁺ where M is H, Na, K, Li, NH4, monoethanolamine, diethanolamine, triethanolamine, isopropylamine, dimethylamine, or dimethylamidopropylamine (DMAPA); Z is H (hydrogen), C1 - C18 linear or branched, saturated or unsaturated alkyl group, a polyalkoxide group with 1 to 20 alkoxide units, CH₂COO, CH₂COO⁻M⁺ or CH₂CH₂COO⁻M⁺ where M is H, Na, K, Li, NH4, monoethanolamine, diethanolamine, triethanolamine, isopropylamine, dimethylamine, or dimethylamidopropylamine (DMAPA); with the provisos that (1) the surfactant has at least one N-CH₂COO, N- CH₂COO⁻M⁺, or N-CH₂CH₂COO⁻M⁺ group where M is H, Na, K, Li, NH4, monoethanolamine, diethanolamine, triethanolamine, isopropylamine, dimethylamine, or dimethylamidopropylamine (DMAPA) and (2) when m = p = 0 and t = 1, X and Z are not a methyl group at the same time.

In another embodiment, the present disclosure is a surfactant useful for enhancing the efficacy of agricultural formulations comprising the following general structure: 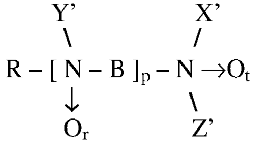 wherein R is C6 - C22 linear or branched, saturated or non-saturated hydrocarbon group; B = C2 - C6 alkyl; p = 0 - 5; r = 0 - 1; t = 0 - 1; X', Y', and Z' independently are CH₃ (methyl) or a polyalkoxide group with 1 to 20 alkoxide units; with the provisos that (1) the surfactant has at least one amide oxide group and (2) when p = 0 and t = 1, X' and Z' are not a methyl group at the same time.

In a further embodiment the present disclosure is a surfactant useful for enhancing the efficacy of agricultural formulations comprising the following general structure: 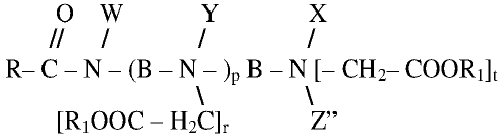 wherein R is C6 - C22 linear or branched, saturated or non-saturated hydrocarbon group; B = C2 - C6 alkyl; p = 0 - 5; r = 0- 1; t = 0 - 1; W is H, CH₂COO, or CH₂CH₂OH; R₁ is nothing, hydrogen or CH₃ and the whole molecule has a chloride as the counter ion for each hydrogen or CH₃ when R₁ is hydrogen or CH₃; X, Y and Z" independently are nothing (or a pair electron), H (hydrogen), CH₃ (methyl), a polyalkoxide group with 1 to 20 alkoxide units, CH₂COO, CH₂COO⁻M⁺ or CH₂CH₂COO⁻M⁺ where M is H, Na, K, Li, NH4, monoethanolamine, diethanolamine, triethanolamine, isopropylamine, dimethylamine, or dimethylamidopropylamine (DMAPA); Z is H (hydrogen), C1 - C18 linear or branched, saturated or unsaturated alkyl group, a polyalkoxide group with 1 to 20 alkoxide units, CH₂COO, CH₂COO⁻M⁺ or CH₂CH₂COO⁻M⁺ where M is H, Na, K, Li, NH4, monoethanolamine, diethanolamine, triethanolamine, isopropylamine, dimethylamine, or dimethylamidopropylamine (DMAPA); with the provisos that (1) the surfactant has at least one N-CH₂COO, N- CH₂COO⁻M⁺, or N-CH₂CH₂COO⁻M⁺ group where M is H, Na, K, Li, NH4, monoethanolamine, diethanolamine, triethanolamine, isopropylamine, dimethylamine, or dimethylamidopropylamine (DMAPA) and (2) when p = 0 and t = 1, X and Z" are not a alkyl group or a hydroxyalkyl group at the same time.

In yet another embodiment the present disclosure comprises a surfactant useful for enhancing the efficacy of agricultural formulations comprising the following general structure: 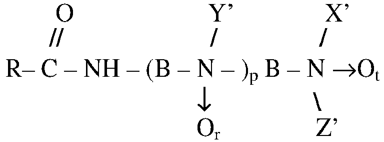 wherein R is C6 - C22 linear or branched, saturated or non-saturated hydrocarbon group; B = C2 - C6 alkyl; p = 0 - 5; r = 0 - 1; t = 0 - 1; X', Y', and Z' independently are CH₃ (methyl) or a polyalkoxide group with 1 to 20 alkoxide units; with the provisos that (1) the surfactant has at least one amine oxide group; and (2) when p = 0, and t = 1, X' and Z' are not a C1-C4 alkyl group at the same time.

Other embodiments of the disclosure include formulations comprising at least one of the nitrogen containing surfactants combined with a pesticide that may be one or more of a herbicide, a fungicide, or insecticide.

Some of the objectives of the present disclosure are as follows: (1) use a low toxicity surfactant of the present disclosure in agricultural formulations that do not carry a "dead-fish-dead-tree" symbol; (2) use a low toxicity surfactant of the present disclosure in agricultural formulations that not only do not carry a "dead-fish-dead-tree" symbol but also have low fish toxicity; (3) use a low toxicity surfactant of the present disclosure in agricultural formulations that not only do not carry a "dead-fish-dead-tree" symbol but also have low fish and low daphnia toxicity; (4) use a low toxicity surfactant of the present disclosure in agricultural formulations that not only do not carry a "dead-fish-dead-tree" symbol but also have low fish, low daphnia, and low algae toxicity; (5) provide a concentrated and stable liquid glyphosate formulation (equal or greater than 360 g ae/l) comprising the surfactant of the present disclosure without a need for a compatibility agent; (6) provide a concentrated and stable liquid glyphosate formulation (equal or greater than 360 g ae/l) comprising the surfactant of the present disclosure with C5-12 dimethylamidopropylamine as the compatibility agent; and (7) provide a formulation with improved bioefficacy, compared to the same formulation without surfactant.

There is a need to have a low toxicity surfactant which can enhance the efficacy of a agricultural formulation when used alone. The ability of one single surfactant to offer enhanced efficacy to an agricultural formulation is more practical because the surfactant has the flexibility of being used alone or used with other surfactants for synergistic effect.

The following nitrogen containing surfactants with a N⁺-CH₂COO⁻, N⁺-CH₂COOCH₃, N-CH₂COO⁻ M⁺, N-CH₂CH₂COO⁻M⁺, or amine oxide functionality are useful to enhance the efficacy of an agricultural chemical. One or more of the following surfactants can be used in agricultural formulations. 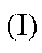 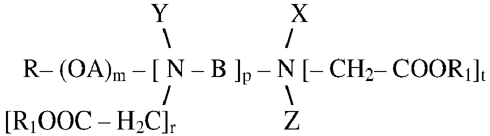 wherein R is C6 - C22 linear or branched, saturated or non-saturated hydrocarbon group; A = C1 - C3 linear or branched alkyl; m = 0 - 10; B = C2 - C6 alkyl; p = 0 - 5; r = 0 - 1; t = 0 - 1; R₁ is nothing, hydrogen or CH₃ and the whole molecule has a chloride as the counter ion for each hydrogen or CH₃ when R₁ is hydrogen or CH₃; X and Y independently are nothing (or a pair electron), H (hydrogen), CH₃ (methyl), a polyalkoxide group with 1 to 20 alkoxide units, CH₂COO, CH₂COO⁻M⁺ or CH₂CH₂COO⁻M⁺ where M is H, Na, K, Li, NH4, monoethanolamine, diethanolamine, triethanolamine, isopropylamine, dimethyamine, or dimethylamidopropylamine (DMAPA); Z is H (hydrogen), C1 - C18 linear or branched, saturated or unsaturated alkyl group, a polyalkoxide group with 1 to 20 alkoxide units, CH₂COO, CH₂COO⁻M⁺ or CH₂CH₂COO⁻M⁺ where M is H, Na, K, Li, NH4, monoethanolamine, diethanolamine, triethanolamine, isopropylamine, dimethylamine, or dimethylamidopropylamine (DMAPA); with the provisos that (1) the surfactant has at least one N-CH₂COO, N-CH₂COO⁻M⁺, or N-CH₂CH₂COO⁻M⁺ group where M is H, Na, K, Li, NH4, monoethanolamine, diethanolamine, triethanolamine, isopropylamine, dimethylamine, or dimethylamidopropylamine (DMAPA) and (2) when m = p = 0 and t = 1, X and Z are not a methyl group at the same time.

It shall be pointed out that the conventional representation of a betaine functionality is N⁺- CH₂COO⁻. However, in the betaine structures throughout the specification, the positive charge on the nitrogen and negative charge on CH₂COO is omitted.

One or more of the following surfactants (II), (III), and/or (IV) can be used in agricultural formulations: 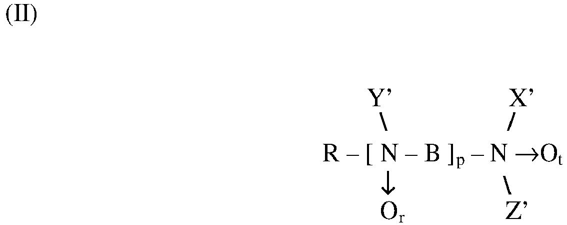 wherein R is C6 - C22 linear or branched, saturated or non-saturated hydrocarbon group; B = C2 - C6 alkyl; p = 0 - 5; r = 0 - 1; t = 0 - 1; X', Y', and Z' independently are CH₃ (methyl) or a polyalkoxide group with 1 to 20 alkoxide units; with the provisos that (1) the surfactant has at least one amide oxide group and (2) when p = 0 and t = 1, X' and Z' are not a methyl group at the same time. 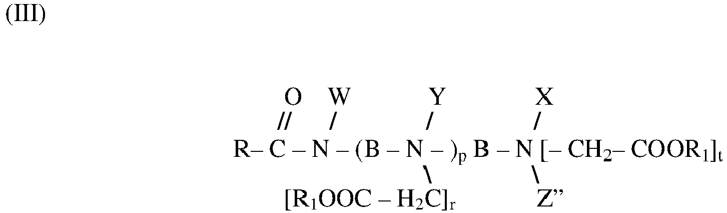 wherein R is C6 - C22 linear or branched, saturated or non-saturated hydrocarbon group; B = C2 - C6 alkyl; p = 0 - 5; r = 0- 1; t = 0 - 1; W is H, CH₂COO, or CH₂CH₂OH; R₁ is nothing, hydrogen or CH₃ and the whole molecule has a chloride as the counter ion for each hydrogen or CH₃ when R₁ is hydrogen or CH₃; X, Y and Z" independently are nothing (or a pair electron), H (hydrogen), CH₃ (methyl), a polyalkoxide group with 1 to 20 alkoxide units, CH₂COO, CH₂COO⁻M⁺ or CH₂CH₂COO⁻M⁺ where M is H, Na, K, Li, NH4, monoethanolamine, diethanolamine, triethanolamine, isopropylamine, dimethyamine, or dimethylamidopropylamine (DMAPA); Z is H (hydrogen), C1 - C18 linear or branched, saturated or unsaturated alkyl group, a polyalkoxide group with 1 to 20 alkoxide units, CH₂COO, CH₂COO⁻M⁺ or CH₂CH₂COO⁻M⁺ where M is H, Na, K, Li, NH4, monoethanolamine, diethanolamine, triethanolamine, isopropylamine, dimethylamine, or dimethylamidopropylamine (DMAPA); with the provisos that (1) the surfactant has at least one N-CH₂COO, N-CH₂COO⁻M⁺, or N-CH₂CH₂COO⁻M⁺ group where M is H, Na, K, Li, NH4, monoethanolamine, diethanolamine, triethanolamine, isopropylamine, dimethylamine, or dimethylamidopropylamine (DMAPA) and (2) when p = 0 and t = 1, X and Z" are not a alkyl group or a hydroxyalkyl group at the same time. 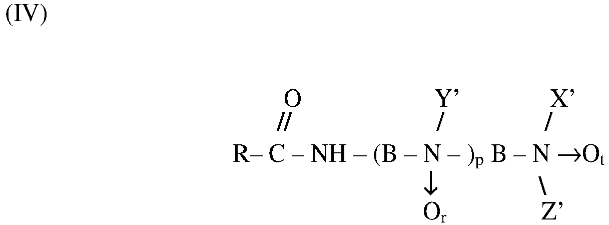 wherein R is C6 - C22 linear or branched, saturated or non-saturated hydrocarbon group; B = C2 - C6 alkyl; p = 0 - 5; r = 0 - 1; t = 0 - 1; X', Y', and Z' independently are CH₃ (methyl) or a polyalkoxide group with 1 to 20 alkoxide units; with the provisos that (1) the surfactant has at least one amide oxide group; and (2) when p = 0, and t = 1, X' and Z' are not a C1-C4 alkyl group at the same time.

The following structures (1) - (6) are typical structures of the present disclosure. R, X, Y, Z, M, p, m, r and t have the same definition as in structure (I) if not specified. 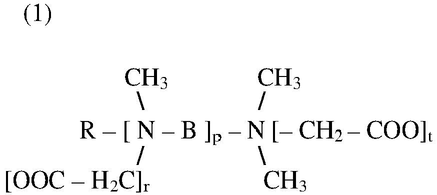 Where p > 0. 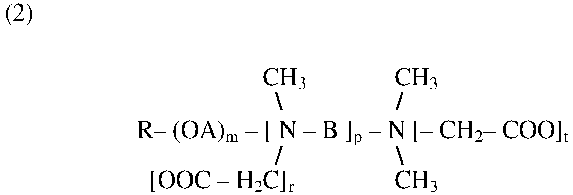 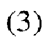 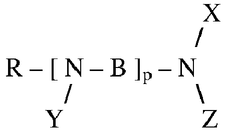 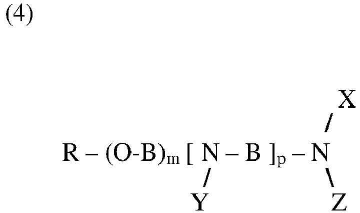 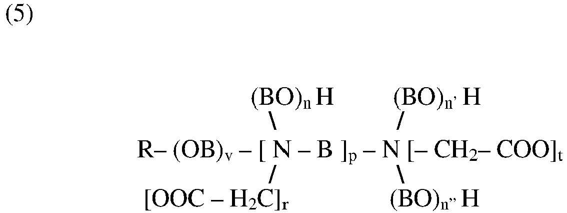 Where n = 0 - 100, n' = 0 - 100, n" = 0 - 100, when p = 0 and v = 0, n' and n" can't be 1 at the same time.

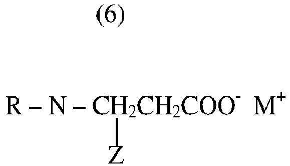

The following structure (a) - (d) are some of the more typical surfactants. R, X, Y, Z, M, p, m, r and t have the same definition as in structure (I) if not specifically mentioned.

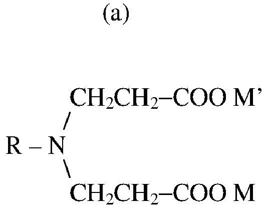

Wherein R is lauryl or coco.

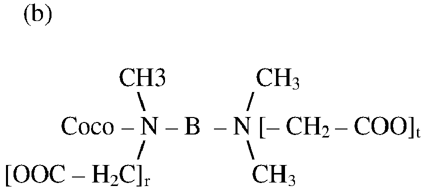

Where B is ethylene, propylene, or isopropylene group. r = 0 - 1, t = 0 - 1, r and t can't be both zero at the same time.

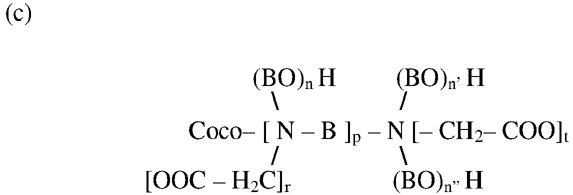

Where p = 0 - 2. B is ethylene, propylene, or isopropylene group. n = 1 - 20, n' = 1 - 20, n" = 1 - 20, r = 0 - 1, t = 0 - 1; with the provisos that r and t can't be both zero at the same time, that p and t can't be both zero at the same time and that when p = 0, n and n' can't be 1 at the same time and said surfactant comprises a betaine of ethoxylated cocoamine. 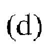 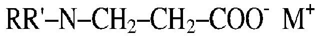 wherein R is tallow and R' is C8.

In certain typical embodiments, the above surfactant is used together with C5-C12 (particularly C6 - C9) dimethyl amidopropylamine,

One embodiment of the present disclosure is a herbicide formulation containing the surfactants of the present disclosure. Suitable herbicides include acetochlor, acifluorfen, aclonifen, alachlor, ametryn, amidosulfuron, aminopyralid, amitrole, anilofos, asulam, atrazine, azafenidin, azimsulfuron, benazolin, benfluralin, bensulfuron-methyl, bentazone, bifenox, binalafos, bispyribac-sodium, bromacil, bromoxynil, butachlor, butroxidim, cafenstrole, carbetamide, carfentrazone-ethyl, chloridazon, Chlorimuron-ethyl, chlorobromuron, chlorotoluron, chlorsulfuron, cinidon-ethyl, cinosulfuron, clethodim, Clomazone, Clopyralid, Cloransulammethyl, Clorsulfuron, Cyanazine, Cycloate, Cyclosulfamuron, Cycloxydim, Dalapon, Desmedipham, Dicamba, Dichlobenil, Dichlormid, Diclosulam, Diflufenican, Dimefuron, Dimepipeate, Dimethachlor, Dimethenamid, Diquat, Diuron, Esprocarb, Ethalfluralin, Ethametsulfuron-methyl, Ethofumesate, Ethoxysulfuron, Fentrazamide, Flazasulfuron, Florasulam, Fluchloralin, Flufenacet, Flumetsulam, Flumioxazin, Fluometuron, Flupyrsulfuronmethyl, Flurochloridone, Fluroxypyr, Flurtamone, Fomesafen, Foramsulfuron, Glufosinate, Hexazinone, Imazamethabenz-m, Imazamox, mazapic, Imazapyr, Imazaquin, Imazethapyr, Imazosulfuron, Iodosulfuron, Ioxynil, Isoproturon, Isoxaben, Isoxaflutole, Lactofen, Lenacil, Linuron, Mefenacet, Mesosulfuron-Methyl, Mesotrione, Metamitron, Metazachlor, Methabenzthiazuron, Metobromuron, Metolachlor, Metosulam, Metoxuron, Metribuzin, Metsulfuron-methyl, Molinate, MSMA, Napropamide, Nicosulfuron, Norflurazon, Oryzalin, Oxadiargyl, Oxadiazon, Oxasulfuron, Oxyfluorfen, Paraquat, Pendimethalin, Phenmedipham, Picloram, Pretilachlor, Profoxydim, Prometryn, Propanil, Propisochlor, Propoxycarbazone, Propyzamide, Prosulfocarb, Prosulfuron, Pyraflufen-ethyl, Pyrazosulfuron, Pyridate, Pyrithiobac, Quinclorac, Quinmerac, Rimsulfuron, Sethoxydim, Simazine, S-Metolachlor, Sulcotrione, Sulfentrazone, Sulfosulfuron, Tebuthiuron, Tepraloxydim, Terbuthylazine, Terbutryn, Thifensulfuron-methyl, Thiobencarb, Tralkoxydim, Tri-allate, Triasulfuron, Tribenuron-methyl, Triclopyr, Trifloxysulfuron, Trifluralin, Triflusulfuron-methyl, Tritosulfuron, and mixtures and combinations thereof. Typical herbicides are Acetochlor, Atrazine, Dicamba, Glufosinate, Paraquat, glyphosate, 2,4-D and mixtures and combinations thereof. More typical herbicides are 2,4-D, Atrazine, Dicamba, glyphosate, and Glufosinate and mixtures and combinations thereof. The most typical herbicide is glyphosate. When the herbicide is an acid, it can be used in the acid form though it is typical that the herbicide be in the salt form selected from at least one of the group of an amine, lithium, sodium, ammonium or potassium. It shall be pointed out that when a pesticide appears in the text as a general name without specifying the counterions, it means both its acid form and salt form through out the specification.

Typical herbicides are glyphosate, dicamba, 2,4-D, glufosinate, and atrazine.

Another embodiment of the present disclosure is a fungicide formulation containing the surfactants of the present disclosure. Examples of suitable fungicides are:

Acibenzolar-S-methyl, aldimorph, amisulbrom, anilazine, azaconazole, azoxystrobin, benalaxyl, benodanil, benomyl, benthiavalicarb, binapacryl, biphenyl, bitertanol, blasticidin-S, boscalid, bromuconazole, bupirimate, captafol, captan, carbendazim, carboxin, carpropamid, chloroneb, chlorothalonil, chlozolinate, copper, cyazofamid, cyflufenamid, cymoxanil, cyproconazole, cyprodinil, dichlofluanid, diclocymet, diclomezine, dicloran, diethofencarb, difenoconazole, diflumetorim, dimethirimol, dimethomorph, dimoxystrobin, diniconazole, dinocap, dithianon, dodemorph, dodine, edifenphos, enestrobin, epoxiconazole, etaconazole, ethaboxam, ethirimol, etridiazole, famoxadone, fenamidone, fenarimol, fenbuconazole, fenfuram, fenhexamid, fenoxanil, fenpiclonil, fenpropidin, fenpropimorph, fentin acetate, fentin chloride, fentin hydroxide, ferbam, ferimzone, fluazinam, fludioxonil, flumorph, fluopicolide, fluoxastrobin, fluquinconazole, flusilazole, flusulfamide, flutolanil, flutriafol, folpet, fosetyl-Al, fthalide, fuberidazole, furalaxyl, furametpyr, guazatine, hexaconazole, hymexazole, imazalil, imibenconazole, iminoctadine, iodocarb, ipconazole, iprobenfos (IBP), iprodione, iprovalicarb, isoprothiolane, isotianil, kasugamycin, kresoxim-methyl, laminarin, mancozeb, mandipropamid, maneb, material of biological, mepanipyrim, mepronil, meptyldinocap, metalaxyl, metalaxyl-M, metconazole, methasulfocarb, metiram, metominostrobin, metrafenone, mineral oils, organic oils, myclobutanil, naftifine, nuarimol, octhilinone, ofurace, origin, orysastrobin, oxadixyl, oxolinic acid, oxpoconazole, oxycarboxin, oxytetracycline, pefurazoate, penconazole, pencycuron, penthiopyrad, phophorous acid and, picoxystrobin, piperalin, polyoxin, potassium bicarbonate, probenazole, prochloraz, procymidone, propamocarb, propiconazole, propineb, proquinazid, prothiocarb, prothioconazole, pyraclostrobin, pyrazophos, pyribencarb, pyributicarb, pyrifenox, pyrimethanil, pyroquilon, quinoxyfen, quintozene (PCNB), salts, silthiofam, simeconazole, spiroxamine, streptomycin, sulphur, tebuconazole, teclofthalam, tecnazene (TCNB), terbinafine, tetraconazole, thiabendazole, thifluzamide, thiophanate, thiophanate-methyl, thiram, tiadinil, tolclofosmethyl, tolylfluanid, triadimefon, triadimenol, triazoxide, tricyclazole, tridemorph, trifloxystrobin, triflumizole, triforine, triticonazole, validamycin, valiphenal, vinclozolin, zineb, ziram, and zoxamide, and mixtures and combinations thereof.

Still another embodiment of the present disclosure is an insecticide formulation containing the surfactants of the present disclosure. Examples of suitable insecticides are: kerosene or borax, botanicals or natural organic compounds (nicotine, pyrethrin, strychnine and rotenone), chlorinated hydrocarbon (DDT, lindane, chlordane), organophosphates (malathion and diazinon), carbamates (carbaryl and propoxur), fumigants (naphthalene) and benzene (mothballs), synthetic pyrethroids, and mixtures and combinations thereof.

Yet still another embodiment of the present disclosure is a mixture of any herbicide, fungicide, and insecticide selected form the above groups containing the surfactants of the present disclosure.

Coco amphoacetate, lauryl amine oxide, lauryl dimethylbetaine, and coco dimethyl amidopropyl betaine surfactants are considered to be readily biodegradable, mild to skin, eyes, and aquatic life when compared to alkylamine ethoxylate. They are used widely in tear fee shampoos for babies. It is expected that the surfactants with the structures of the present disclosure can also be made mild.

The surfactants of the present disclosure can be used as a tank-mix additive or formulated in an in-can formulation. They are suitable in a solid pesticide formulation and, particularly, in a liquid pesticide formulation.

Other additives can be present in the formulations containing the surfactants of the present disclosure. They are defoamer, diluents, compatibility agents, biocides, thickeners, drift control agents, dyes, fragrance, and chelating agents. The use of a compatibility agent is particularly important if the nitrogen containing surfactant of the present disclosure is not very compatible in concentrated pesticide formulations. When using a compatibility agent, it is advantageous that the compatibility agent is a surfactant which can also enhance the efficacy of the pesticide. One such a typical compatibility agent is C6-C12 dimethylamidopropylamine.

Unlike many other prior art surfactants, some of the surfactants of the present disclosure showed excellent compatibility without any help from a compatibility agent in concentrated aqueous glyphosate systems.

The use concentration of the surfactant of the present disclosure in an in-can pesticide formulations may be from about 0.005% to about 20%, preferably about 0.05 to about 15%, and more preferably about 0.5 to about 10% in % active basis. The use concentration of the surfactant of the present disclosure in a tank mix pesticide spray solution may be from about 0.001% to about 5%, preferably about 0.01 to about 2%, and more preferably about 0.1 to about 1% (in % active surfactant basis).

The surfactants of the disclosure may also be used with other surfactants such as alkylamine alkoxylate and their quaternary, anionic surfactant such as sulfate and sulfonate from alcohol and alkoxylated alcohol, phosphate ester and ethoxylated phosphate ester, nonionic surfactant such as alcohol alkoxylate and alkyl (C6-C18) polyglucoside, and silicone surfactant.

It is understood that a primary advantage of any of the surfactants mentioned above that are included in the disclosure is that the surfactant may be the only surfactant employed in the formulation.

It might also be the case that there is a synergy between the surfactants of the present disclosure and one or more other surfactants that renders the combination of surfactants more effective than either surfactant when used alone.

In the case that another surfactant is used together with the surfactants of the present disclosure, it is advantageous that the mixtures of the surfactants have low aquatic toxicity and low irritation profiles. Employing the surfactants with low aquatic toxicity and low irritation profiles of the present disclosure in the formulation can reduce the total toxicity of a blend while keeping the efficacy more or less the same even if a not-so favorable surfactant in terms of the aquatic toxicity and irritation profiles is used in the blend.

### Additional Embodiments:

In one embodiment, the agricultural formulation includes the at least one agricultural active and an alkyl imino dipropionate having the formula: 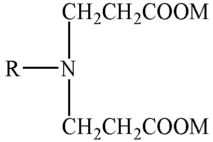 wherein R is a C6 - C24, linear or branched, alkyl group, and wherein each M is independently a cation chosen from Mg²⁺, Ca²⁺, NH₄ ⁺, K⁺, and Na⁺. The formulation is free of an alkylamine and/or derivative thereof if R is lauryl.

In one embodiment, R is a C8 alkyl group. In another embodiment, R is a 2-ethylhexyl group. In still other embodiments, R is a C6, C7, C8, C9, C10, C11, C12, C13, C14, C15, C16, C17, C18, C19, C20, C21, C22, C23, or C24 group, or any range thereof including and between the aforementioned values. Moreover, it is contemplated that the cation may be any known in the art wherein Mg²⁺, Ca²⁺, NH₄⁺, K⁺, and Na⁺ are most typical.

In various embodiments, the formulation is free of an alkylamine and/or derivative thereof. This may be when R is lauryl or when R is any other substituent as described above. For example, the formulation may be free of an alkylamine and/or derivative thereof when R is 2-ethylhexyl. In the alternative, in various non-limiting embodiments, the formulation may include an alkylamine and/or derivative thereof. If included, the alkylamine and/or derivative thereof may be utilized in any amount as determined by one of skill in the art, e.g. in any amount described in US2010/0317522 which is expressly incorporated herein by reference relative to these non-limiting embodiments.

The alkylamine derivative may be any known in the art. For example, the alkylamine derivative may be an alkoxylated reaction product of a fatty acid and an amine. In one embodiment, the derivative is the alkoxylated reaction product of a fatty acid and a dialkylamine. In another embodiment, the derivative is the alkoxylated reaction product of a fatty acid and a dimethylamine. In another embodiment, the derivative is the alkoxylated reaction product of a fatty acid and a diethylamine. In one embodiment, the derivative is the ethoxylated reaction product of a fatty acid and a dialkylamine. In another embodiment, the derivative is the ethoxylated reaction product of a fatty acid and a dimethylamine. In another embodiment, the derivative is the ethoxylated reaction product of a fatty acid and a diethylamine. In one embodiment, the derivative is the alkoxylated reaction product of a tallow- and/or coco-fatty acid and a dialkylamine. In another embodiment, the derivative is the alkoxylated reaction product of a tallow- and/or coco-fatty acid and a dimethylamine. In another embodiment, the derivative is the alkoxylated reaction product of a tallow- and/or coco-fatty acid and a diethylamine. In one embodiment, the derivative is the ethoxylated reaction product of a tallow- and/or coco-fatty acid and a dialkylamine. In another embodiment, the derivative is the ethoxylated reaction product of a tallow- and/or coco-fatty acid and a dimethylamine. In another embodiment, the derivative is the ethoxylated reaction product of a tallow- and/or coco-fatty acid and a diethylamine. It is also contemplated that the formulation may be free of an alkylamine, such as monoethanol amine, diethanol amine, triethanol amine, polyaliphatic amines, and combinations thereof. Even further, it is contemplated that the formulation may be free of any alkylamine or derivative thereof as described in US2010/0317522 which is expressly incorporated herein by reference relative to this non-limiting embodiment.

In one embodiment, the at least one agricultural active is an herbicide. For example, the herbicide may be glyphosate, glufosinate, or combinations thereof. In other embodiments, the at least one agricultural active is an insecticide. In other embodiments, the at least one agricultural active is a fungicide. For example, the fungicide may be azoxystrobin.

The formulation may alternatively include a supplemental surfactant chosen from a monoglyceride, a diglyceride, and combinations thereof. In one embodiment, the supplemental surfactant is a monoglyceride to the exclusion of a diglyceride. In another embodiment, the supplemental surfactant is a diglyceride to the exclusion of a monoglyceride. In a further embodiment, the supplemental surfactant is a combination of a monoglyceride and a diglyceride. The supplemental surfactant may be present in any amount chosen by one of skill in the art. In various embodiments, the supplemental surfactant is utilized in an amount of from about 1 to about 15, about 2 to about 10, or about 3 to about 8, weight percent actives based on a total weight of the formulation. In other embodiments, this amount is about 1, 2, 3, 4, 5, 6, 7, 8, 9, 10, 11, 12, 13, 14, or 15, weight percent actives based on a total weight of the formulation. In various non-limiting embodiments, all values and ranges of values including and between those set forth above are hereby expressly contemplated for use herein.

In one embodiment, the formulation consists essentially of the herbicide, the alkyl imino dipropionate, and the supplemental surfactant. In one embodiment, the formulation consists essentially of the herbicide and the alkyl imino dipropionate. In one embodiment, the formulation consists essentially of the insecticide, the alkyl imino dipropionate, and the supplemental surfactant. In one embodiment, the formulation consists essentially of the insecticide and the alkyl imino dipropionate. In one embodiment, the formulation consists essentially of the fungicide, the alkyl imino dipropionate, and the supplemental surfactant. In one embodiment, the formulation consists essentially of the fungicide and the alkyl imino dipropionate. The terminology "consists essentially of' describes various non-limiting embodiments that are free of, or include less than 5, 4, 3, 2, 1, 0.5, or 0.1, weight percent actives of any additives, surfactants, pesticides, and/or active agents, etc. known in the art. However, relative to the embodiments that include the supplemental surfactant, it is contemplated that the formulation may be free of all other surfactants that are not the supplemental surfactant described herein. Moreover, the terminology "consists essentially of' may describe various non-limiting embodiments that are free of, or include less than 5, 4, 3, 2, 1, 0.5, or 0.1, weight percent actives of any optional component described in this disclosure or known in the art relative to agricultural formulations.

In still other embodiments, the formulation as described above is free of the alkylamine derivative, wherein the alkylamine derivative is the ethoxylated reaction product of a tallow-and/or coco-fatty acid with dimethylamine. Alternatively, the formulation as described above may be free of the alkylamine, wherein the alkylamine is chosen from monoethanol amine, diethanol amine, triethanol amine, polyaliphatic amines, and combinations thereof. In one embodiment, R is a C8 alkyl group. In another embodiment, R is a 2-ethylhexyl group. In a further embodiment, the at least one agricultural active is an herbicide. For example, the herbicide may be glyphosate. Alternatively, the herbicide may be glufosinate. Alternatively, the herbicide may be a combination of glyphosate and glufosinate. Alternatively, the at least one agricultural active is an insecticide. Alternatively, the at least one agricultural active is a fungicide. For example, the fungicide may be azoxystrobin. In other embodiments, the formulation includes a supplemental surfactant chosen from a monoglyceride, a diglyceride, and combinations thereof. In other embodiments, the formulation, consists essentially of the herbicide, the alkyl imino dipropionate, and the supplemental surfactant. In other embodiments, the formulation consists essentially of the herbicide and the alkyl imino dipropionate.

In other embodiments, this disclosure provides an agricultural formulation comprising:
an herbicide chosen from glyphosate, glufosinate, and combinations thereof; and
an alkyl imino dipropionate having the formula: 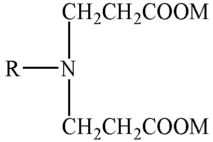
wherein R is 2-ethylhexyl and wherein each M is Na⁺.
For example, the formulation may consist essentially of the herbicide and the alkyl imino dipropionate. The formulation may be free of an alkylamine derivative that is the ethoxylated reaction product of a tallow- and/or coco-fatty acid with dimethylamine and/or may be free of an alkylamine.

In other embodiments, the disclosure provides an agricultural formulation comprising:
a fungicide, e.g. azoxystrobin; and
an alkyl imino dipropionate having the formula: 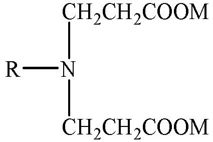
wherein R is 2-ethylhexyl and wherein each M is Na⁺.
For example, the formulation may consist essentially of the fungicide, e.g. azoxystrobin, and the alkyl imino dipropionate. The formulation may be free of an alkylamine derivative that is the ethoxylated reaction product of a tallow- and/or coco-fatty acid with dimethylamine and/or may be free of an alkylamine.

The present invention is further described by the following embodiments [1] to [20]:
[1] An agricultural formulation comprising:
   at least one agricultural active; and
   an alkyl imino dipropionate having the formula: 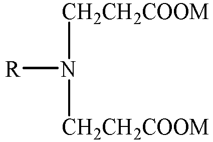
   wherein R is a C6 - C24, linear or branched, alkyl group, and wherein each M is independently a cation chosen from Mg²⁺, Ca²⁺, NH₄ ⁺, K⁺, and Na⁺, and
   wherein the formulation is free of an alkylamine and/or derivative thereof if R is lauryl.
[2] The formulation of [1] that is free of the alkylamine derivative, wherein the alkylamine derivative is the ethoxylated reaction product of a tallow- and/or coco-fatty acid with dimethylamine.
[3] The formulation of [2] that is free of the alkylamine, wherein the alkylamine is chosen from monoethanol amine, diethanol amine, triethanol amine, polyaliphatic amines, and combinations thereof.
[4] The formulation of [1] that is free of the alkylamine, wherein the alkylamine is chosen from monoethanol amine, diethanol amine, triethanol amine, polyaliphatic amines, and combinations thereof.
[5] The formulation of [1] wherein R is a C8 alkyl group.
[6] The formulation of [1] wherein R is a 2-ethylhexyl group.
[7] The formulation of [1] wherein the at least one agricultural active is an herbicide.
[8] The formulation of [7] wherein the herbicide is glyphosate.
[9] The formulation of [7] wherein the herbicide is glufosinate.
[10] The formulation of [1] wherein the at least one agricultural active is an insecticide.
[11] The formulation of [1] wherein the at least one agricultural active is a fungicide.
[12] The formulation of [11] wherein the fungicide is azoxystrobin.
[13] The formulation of [1] further comprising a supplemental surfactant chosen from a monoglyceride, a diglyceride, and combinations thereof.
[14] The formulation of [13] consisting essentially of the herbicide, the alkyl imino dipropionate, and the supplemental surfactant.
[15] The formulation of [1] consisting essentially of the herbicide and the alkyl imino dipropionate.
[16] An agricultural formulation comprising:
   an herbicide chosen from glyphosate, glufosinate, and combinations thereof; and
   an alkyl imino dipropionate having the formula: 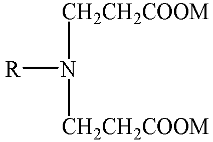
   wherein R is 2-ethylhexyl and wherein each M is Na⁺.
[17] The formulation of [16] consisting essentially of the herbicide and the alkyl imino dipropionate.
[18] The formulation of [17] wherein the formulation is free of an alkylamine derivative that is the ethoxylated reaction product of a tallow- and/or coco-fatty acid with dimethylamine and is free of an alkylamine.
[19] The formulation of [16] wherein the formulation is free of an alkylamine derivative that is the ethoxylated reaction product of a tallow- and/or coco-fatty acid with dimethylamine and is free of an alkylamine.
[20] An agricultural formulation comprising:
   azoxystrobin; and
   an alkyl imino dipropionate having the formula: 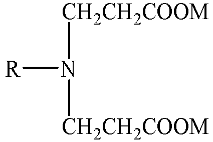
   wherein R is 2-ethylhexyl and wherein each M is Na⁺.

The following non-limiting examples are presented to further illustrate and explain the present disclosure.

### EXAMPLES

### Example 1

Four glyphosate samples with various surfactants were sprayed on morning glory (IPOHE, a broad leaf week) and wheat (TRIAV, a narrow leaf grass) in a green house setting. The surfactants are designated in Table 1.

**Table 1. Studied glyphosate formulations using various surfactants**

| Sample | Description | Glyph : surf ratio |
|---|---|---|
| A | Glyphosate with Mono sodium lauryl iminodipropionate | 3 : 1 |
| B | Glyphosate with Coco diamine trimethyl betaines | 6.7 : 1 |
| c | Glyphosate with Tallowamine 15EO | 3 : 1 |
| D | Glyphosate (isopropylamine salt) alone without surfactant | |

The glyphosate rates of the spray solutions were 186, 372, and 743 g ae/ha (gram acid equivalent per hectare). The glyphosate to surfactant ratio was fixed at 3:1 except for sample B (coco diamine trimethyl betaines) which had a ratio of 6.7. Higher ratio means lower surfactant concentration. A ratio of 6.7 means the sample, at the same glyphosate concentration, has 2.2 times less surfactant than a sample with a ratio of 3.

Sample D served as a negative control, since it contained only glyphosate without added surfactant. Sample C served as a positive control since it is well known that tallowamine-15EO is an excellent surfactant to enhance glyphosate efficacy.

% Control ratings were conducted by an experienced person at 7, 14, 21, and 29 days after treatment (DAT). Digital pictures were also taken at the time of rating. Each % Control value was an average of 4 replicas.

The mono sodium lauryl iminodipropionate of Sample A has the following nominal structure which can be obtained by reacting alkylamine with acrylic acid then neutralized with a base (NaOH).

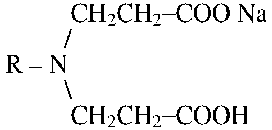

The Cocodiamine trimethyl betaines of Sample B has the following nominal structure which can be obtained by reacting N'N'N'-trimethyl cocodiamine with sodium monochloroacetate (SMCA): 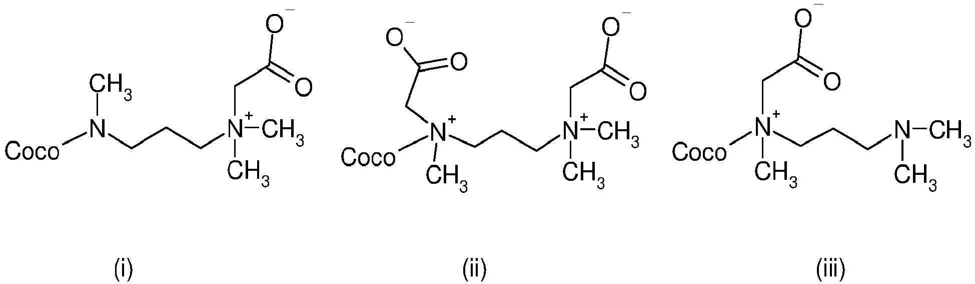 Wherein R = coco.

The Cocodiamine trimethyl betaines showed good adjuvancy for glyphosate even at very low use rate, and speeded up glyphosate activity, as indicated in the following result.

Results are shown in Table 2.

**Table 2. Bioefficacy result of example 1.**

| Label | Glyphosate : surfactant | Species | Glyph rate, g ae/h | % Control 7DAT | % Control 14DAT | % Control 21DAT | % Control 29DAT |
|---|---|---|---|---|---|---|---|
| A | 3 | MG | 186 | 60 | 73 | 81 | 55 |
| B | 6.7 | MG | 186 | 89 | 96 | 97 | 97 |
| c | 3 | MG | 186 | 91 | 97 | 98 | 99 |
| D | | MG | 186 | 55 | 68 | 79 | 68 |
| | | | | | | | |
| A | 3 | MG | 372 | 63 | 74 | 86 | 78 |
| B | 6.7 | MG | 372 | 84 | 90 | 91 | 90 |
| c | 3 | MG | 372 | 79 | 86 | 93 | 89 |
| D | | MG | 372 | 86 | 89 | 95 | 93 |
| | | | | | | | |
| A | 3 | MG | 743 | 83 | 93 | 96 | 97 |
| B | 6.7 | MG | 743 | 93 | 98 | 98 | 99 |
| c | 3 | MG | 743 | 98 | 99 | 99 | 99 |
| D | | MG | 743 | 83 | 90 | 94 | 91 |
| | | | | | | | |
| A | 3 | WT | 186 | 48 | 86 | 91 | 93 |
| B | 6.7 | WT | 186 | 91 | 99 | 100 | 100 |
| c | 3 | WT | 186 | 89 | 96 | 98 | 99 |
| D | | WT | 186 | 28 | 60 | 80 | 58 |
| | | | | | | | |
| A | 3 | WT | 372 | 63 | 84 | 92 | 95 |
| B | 6.7 | WT | 372 | 93 | 98 | 100 | 100 |
| c | 3 | WT | 372 | 93 | 100 | 100 | 100 |
| D | | WT | 372 | 58 | 85 | 89 | 89 |
| | | | | | | | |
| A | 3 | WT | 743 | 92 | 100 | 100 | 100 |
| B | 6.7 | WT | 743 | 96 | 100 | 100 | 100 |
| c | 3 | WT | 743 | 97 | 100 | 100 | 100 |
| D | | WT | 743 | 84 | 94 | 98 | 98 |

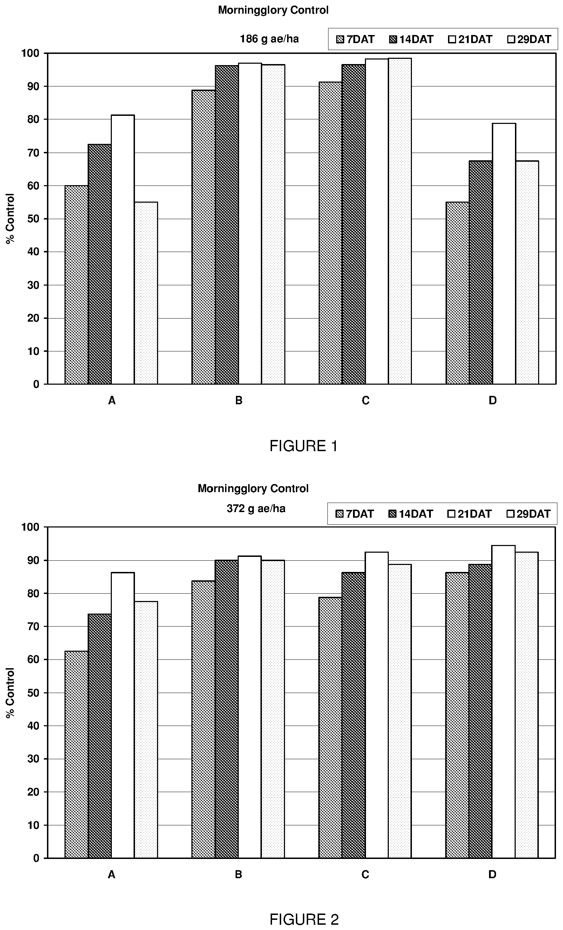

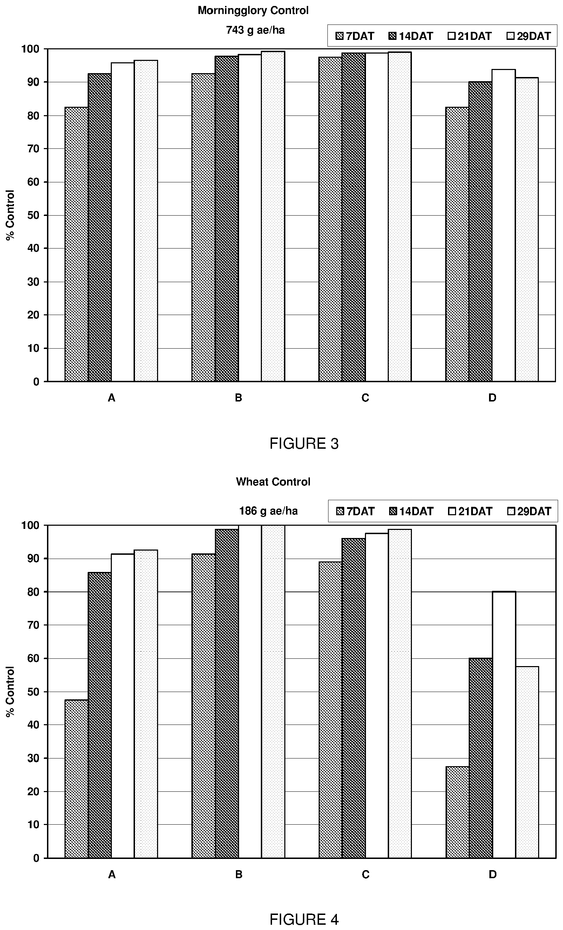

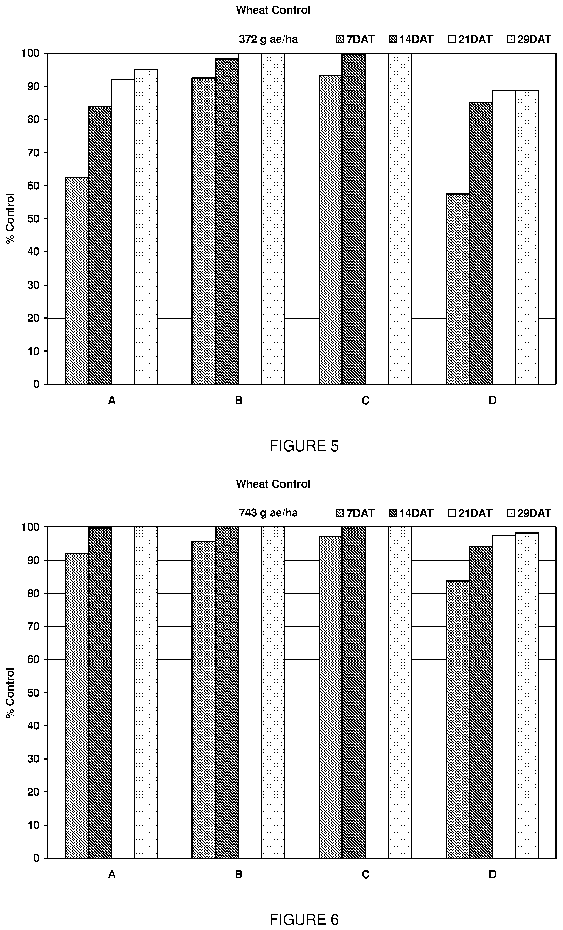

The results are also shown in FIGS. 1-6.

It can be seen from FIGS. 1-6 that for a given plant, a given glyphosate to surfactant ratio and a given glyphosate rate there will be an embodiment of the disclosure having at least as high a % control as glyphosate alone.

### Example 2

Three concentrated glyphosate samples were studied and are shown in Table 3.

**Table. 3 Studied glyphosate formulations using various surfactants**

| Label | Description | Glyph : surf ratio |
|---|---|---|
| A | Roundup Original (with tallowamine-15EO) | 3:1 |
| B | Glyphosate alone without surfactant | |
| c | Glyphosate with tallow diamine trimethyl di-betaine | 13:1 |

The concentrated glyphosate samples were diluted to two glyphosate rates and sprayed in a green house so that the final glyphosate rates of the spray solutions were 489 and 978 g ae/H. Three samples at two rates equals six treatments that were sprayed on each of two species, morning glory (IPOHE, a broad leaf week) and winter wheat (TRZAW, a narrow leaf grass). Two rates were employed, 978 g ae/H, and 16 - 30 at 489 g ae/ha.

The glyphosate to surfactant ratio was fixed at 3:1 except for sample C (tallow trimethyl di-betaine) which had a ratio of 13:1. Higher ratio means lower surfactant concentration. A ratio of 13:1 means the sample, at the same glyphosate concentration, has 4.3 times less surfactant than a sample with a ratio of 3:1.

Sample A (glyphosate with added tallowamine-15EO) served as a positive control. Sample B containing only glyphosate without added surfactant served as a negative control.

The tallow diamine trimethyl di-betaine of Sample C was a 30% active material in water (with some NaCl) and its nominal structure is shown in the following:

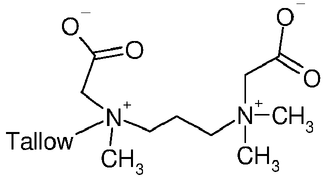

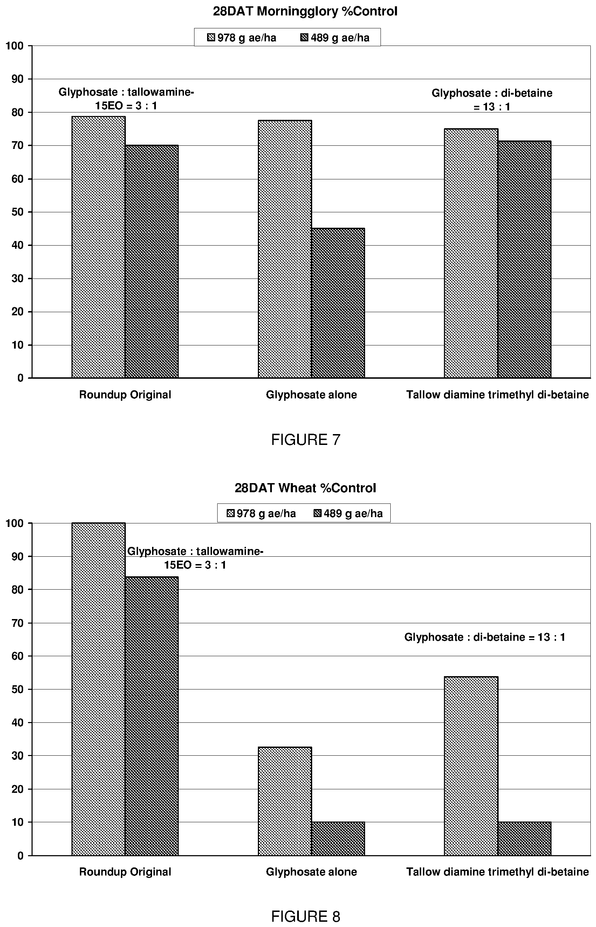

FIGS. 7-8 illustrates the % control results at 28 DAT.

It can be seen that tallow diamine trimethyl di-betaine enhanced glyphosate bioefficacy even at very low rate.

### Example 3

Glyphosate formulation containing oleylamphopolycarboxy glycinate (Na salt) was compared in a green house trial with glyphosate formulation containing tallowamine-10EO (as positive control) and glyphosate alone in terms of % Control. Three glyphosate rates were used, 930 g ae/ha, 465 gae/ha, and 233 g ae/ha.

The nominal structure in Oleylamphopolycarboxyglycinate (30% active, 10% NaCl, 60% H2O) is shown in the following:

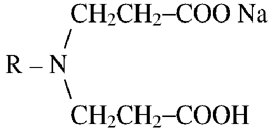

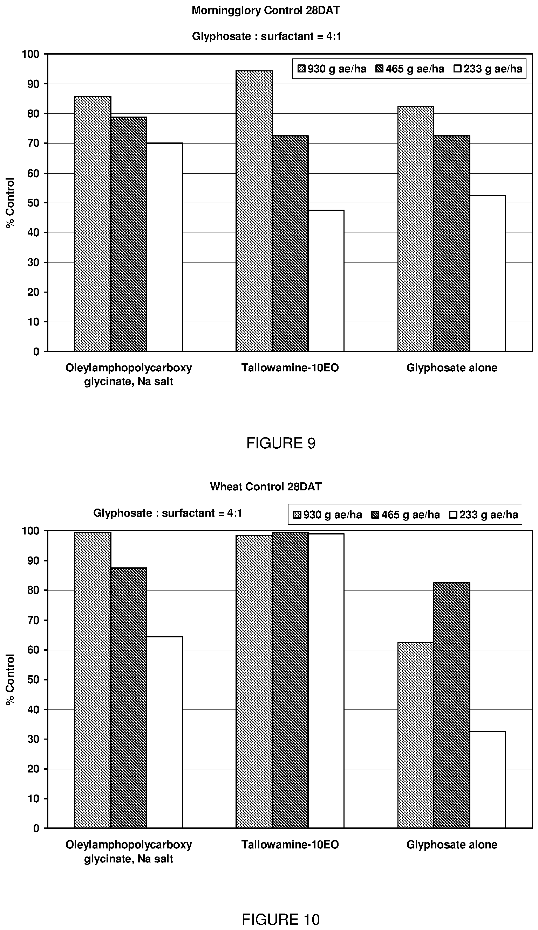

The results are plotted in FIGS. 9-10.

This data showed that oleylamphopolycarboxy glycinate (Na salt) enhanced glyphosate efficacy when compared with the glyphosate formulation without surfactant.

### Example 4

Five concentrated glyphosate samples were studied and they are shown in Table 4.

**Table. 4 Studied glyphosate formulations using various surfactants (glyphosate : surfactant ratio = 4:1)**

| Label | Description |
|---|---|
| A | Armoteric CL8 |
| B | Mono sodium lauryl iminodipropionate |
| c | Tallowamine-15EO |
| D | Glyphosate alone without surfactant |
| E | Glyphosate with tallow diamine trimethyl di-betaine |

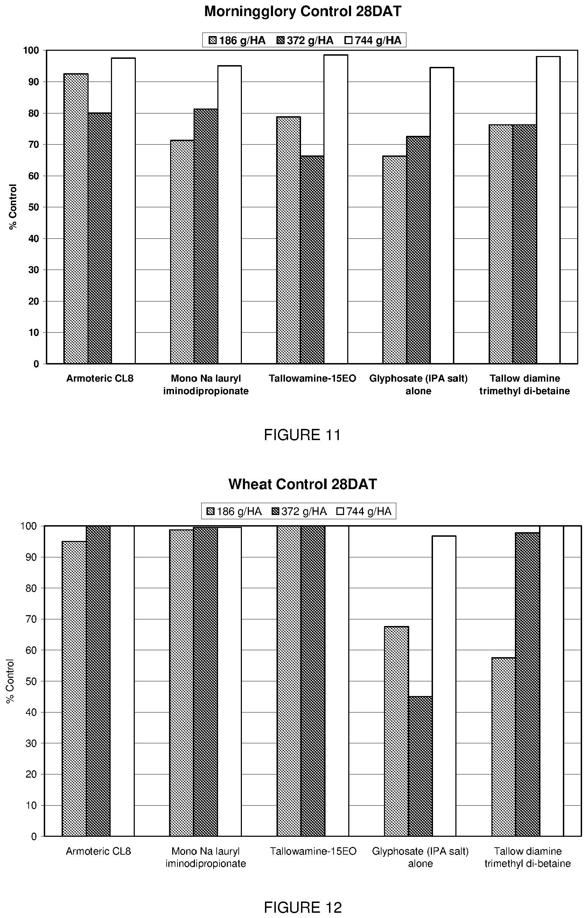

28DAT data at three glyphosate rates are plotted in FIGS. 11-12.

The nominal structure of Armoteric CL8 is shown in the following, and it can be obtained by reacting Coco-NH-C8 with acrylic acid then neutralized with NaOH.

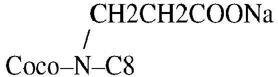

Nominal structures for Mono sodium lauryl iminodipropinate and tallow diamine trimethyl di-betaine can be found in Examples 1 and 2, respectively.

### Example 5

Cocoamine-6EO betaine was compared in the same trial with tallowamine-15EO as the positive control and the surfactant-free sample as negative control in glyphosate formulations. Glyphosate to surfactant ratio was 3 : 1.

The nominal structure in Ethoxylated cocoamine (6EO) betaine is showed in the following:

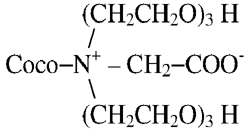

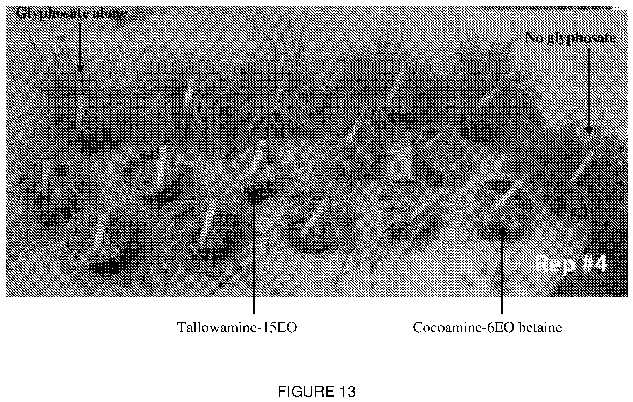

The result showed that at a rate of 168 g ae/ha, glyphosate formulations containing cocoamine-6EO betaine and tallowamine-15EO both gave excellent control to wheat while glyphosate sample without surfactant did not give much control. This can be seen from the picture at FIG. 13, taken at 21DAT.

### Example 6

This example shows the advantage of the surfactants of the present disclosure over those of the prior art in high load glyphosate (ammonium and potassium salts) formulations. The studied samples and results are showed in the following table.

**Table 5. Compatibility study of some of the surfactants of the present disclosure and surfactants of prior art.**

| | #1 | #2 | #3 | #4 | #5 | #6 | #7 | #8 |
|---|---|---|---|---|---|---|---|---|
| Di-NH4-glyphosate | 32.3 | | 32.2 | | 28.6 | 23.4 | | |
| K-glyphosate | | 40.4 | | 33.2 | | | 25.8 | 31.2 |
| Water | 61.4 | 55.1 | 61.4 | 57.8 | 62.4 | 74.3 | 72.8 | 68 |
| Cocoamphopolycarboxy glycinate | 6.3 | 4.5 | | | | | | |
| Cocoiminopropionate | | | 6.4 | 9 | | | | |
| Mono sodium C12 iminodipropionic (active compound in Deriphat 160C) | | | | | 9 | | | |
| Sodium Lauroamphoacetate (active compound in Minanol L-32) | | | | | | 2.3 | 1.4 | |
| Disodium Cocoamphodiacetate (active compound in Miranol C2M conc) | | | | | | | | 0.8 |
| Appearance @ 25 C | Clear | Clear | Clear | Clear | Clear | Hazy | Hazy | Hazy |

The chemical structures of Cocoamphopolycarboxyglycinate are shown in the following:

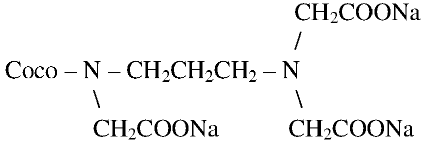

Cocoiminopropionate:

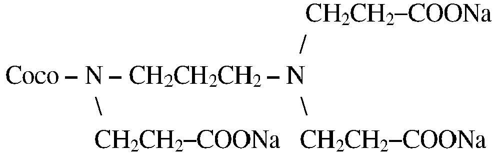

Mono sodium C12 iminodipropionate:

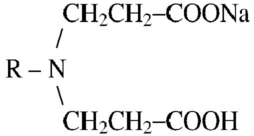

#1 to #5 represent the present disclosure while #6 - #8 represent the prior art. A hazy appearance indicates lack of compatibility.

### Example 7

This example shows that an incompatible surfactant of the present disclosure can be made compatible with the addition of a small amount of a compatibility agent, C6-C9 dimethyamidopropylamine. The studied samples and results are shown in the following table.

**Table 6. Effect of compatibility agent on the solubility of Mono sodium lauryl iminodipropinate in concentrated K-glyphosate formulation**

| | #1 | #2 | #3 | #4 |
|---|---|---|---|---|
| K-glyphosate | 29.6 % | 29.6 % | 29.6 % | 29.6 % |
| Water | 70.02 % | 69.65 % | 69.65 % | 44.1 % |
| Deriphat 160C | 0.38 % | 0.38 % | 0.38 % | 24.3 % |
| C6-9 dimethylamidopropylamine | | 0.37 % | | 2% |
| Sodium hydroxide | | | 0.37 % | |
| Appearance at 25 °C | Hazy | Clear | Hazy | Clear |

In this example, Deriphat 160C^{®} (30% Mono sodium lauryl iminodipropionate in water manufactured by Cognis Co.) could not be dissolved in 29.6% K-glyphosate (aq.) if the concentration of Deriphat 160C was > 0.38% (#1 in the table). With the addition of 0.37% C6-9 dimethylamidopropylamine, the hazy formulation became a clear solution (#2). #3 showed that pH effect is not the main reason for the dissolution of the insoluble species in K-glyphosate formulation. This concentration of surfactant in #1 was much too low to offer any benefit to glyphosate efficacy. In order for a surfactant to offer consistent benefit to glyphosate efficacy, the surfactant concentration typically has to be about greater than 7%. However, more than 24.3% Deriphat could be dissolved in the 29.6% K-glyphosate (aq.) if 2% C6-C9 dimethyamidopropylamine was added as the compatibility agent (#4).

### Additional Examples:

### Materials used:

Adsee 900 = C10 alkyl ethoxylate alcohol ex AkzoNobel
Adsee AMP40 is an amphoteric product of formula I with p=0, M = Na+ and R is 2-ethylhexyl ex AkzoNobel
Cocoiminodipropionate, the amphoteric product of formula I with p=0, M = Na+ and R is coco-derived (on average 14 carbon alkyl).
Azoxystrobin 23 SC = Amistar ex Syngenta
Fluopyram + tebuconazole = Luna^{®} Experience ex Bayer
Metrafenone = commercial product
Thiophanate = commercial 70% wettable powder product
Water = demineralized water.

**Table 1 (a): Treatment details:**

| Tr. No | Product | Dose (ml or g / 15 litre water) |
|---|---|---|
| T1 | Adsee AMP40+ Azoxystrobin 23 SC | 5 ml &7.5 ml respectively |
| T6 | Water only + Azoxystrobin 23 SC | Same as above |
| T7 | Untreated control | - |

The spray solution was applied using a Knapsack sprayer, whereby the spray amount was 1000 1/ha at full canopy.

**Table 1 (b): Dates of pruning, harvesting and adjuvant sprays on grapes**

| Date of pruning : 1/11/2016 | | |
|---|---|---|
| Spray No. | Date of spray | Days after pruning |
| 1 | 25/12/2016 | 54 |
| 2 | 02/01/2017 | 62 |
| 3 | 11/01/2017 | 71 |
| 4 | 19/01/2017 | 79 |
| Date of Harvesting: 03/03/2017 (122 days) | | |

**Table 1 (c): Dates of sowing, harvesting and adjuvant sprays on tomato**

| Date of sowing : 25/11/2016 | | |
|---|---|---|
| Spray No. | Date of spray | Days after sowing |
| 1 | 25/01/2017 | 61 |
| 2 | 02/02/2017 | 69 |
| 3 | 10/02/2017 | 77 |
| Date of Harvesting: | Picking 1: 03/03/2017 (153 days) | |
| | Picking 2: 07/03/2017 (157 days) | |

Results for powdery mildew control on grapes:

**Table 2: Bio-efficacy of "Adjuvants" used with azoxystrobin against powdery mildew on leaves of grapes**

| Treatments | Dose (g or ml/l) | Powdery mildew on leaves (PDI) | | | | |
|---|---|---|---|---|---|---|
| | Adjuvant + azoxystrobin | 27/12/16 | 04/01/17 | 13/01/17 | 21/01/17 | Mean PDI |
| T1 | 3.0 + 2.0 | 0.00 | 0.31 | 1.20 | 3.17 | 1.56 |
| T6 | 0 + 2.0 | 0.00 | 2.38 | 8.80 | 15.57 | 8.92 |
| T7 | -- | 0.58 | 19.50 | 22.67 | 25.97 | 22.71 |

The dose is the amount of adjuvant and azoxystrobin used in the spray solution. Clearly, T1, according to the disclosure had improved efficacy of the fungicide, while it has a better ecotoxicity profile because there is no need to label it with the dead-fish-dead-tree symbol.

**Table 3: Bio-efficacy of "Adjuvants" used with azoxystrobin against powdery mildew on bunches of grapes**

| Treatments | Dose (g or ml/l) | Powdery mildew on bunches (PDI) | | | | |
|---|---|---|---|---|---|---|
| | Adjuvant + azoxystrobin | 27/12/16 | 04/01/17 | 13/01/17 | 21/01/17 | Mean PDI |
| T1 | 3.0 + 2.0 | 0.00 | 0.65 | 1.17 | 3.19 | 1.25 |
| T6 | 2.0 | 0.00 | 2.50 | 4.34 | 10.26 | 4.28 |
| T7 | -- | 3.13 | 7.96 | 10.74 | 23.45 | 11.32 |

Clearly, T1, according to the disclosure had improved efficacy of the fungicide, while it has a better ecotoxicity profile.

**Table 4: Effect of sprays of "Adjuvants" used with azoxystrobin on harvestable yield of Grapes**

| Tr. No. | Treatments | Dose | Harvestable Yield (Kg/vine) |
|---|---|---|---|
| | | Formulation (g or ml/l) | |
| T1 | Adsee AMP40 + Azoxystrobin 23 SC | 3.0 + 2.0 | 13.98 |
| T6 | Azoxystrobin 23 SC | 2.0 | 11.89 |
| T7 | Untreated control | -- | 9.57 |

T1, according to the disclosure, resulted in a very high harvestable yield, while it has a better ecotoxicity profile.

The evaluation of the bio-efficacy of "Adjuvants" with fungicide against powdery mildew on leaves of grapes of Table 2 was repeated in an experiment with thiophanate-methyl as the fungicide. The fungicide was applied after fruit pruning. Thiophanate-methyl (0.7 ml) was used along with 1 ml adjuvant per liter spray solution.

**Table 5. Bio-efficacy of "Adjuvants" used with thiophanate-methyl against powdery mildew on leaves of grapes**

| Treatments | Adjuvant | Powdery mildew on leaves (Mean PDI) | |
|---|---|---|---|
| | | After 10 weeks | After 12 weeks |
| U1 | Adsee AMP40 | 1.13 | 2.38 |
| U8 | Cocoimino dipropionate | 5.25 | 7.94 |
| U7 | Untreated control | 12.94 | 17.81 |

Clearly, U1 and U8, according to the disclosure, had improved efficacy of the fungicide, while U1 also has a better ecotoxicity profile.

The evaluation of the bio-efficacy of "Adjuvants" with fungicide against powdery mildew on leaves of grapes of Table 5 was repeated with metrafenone as the fungicide. Metrafenone (0.01g active material) was used with 1 ml adjuvant per liter of spray solution.

**Table 6. Bio-efficacy of "Adjuvants" used with metrafenone against powdery mildew on leaves of grapes**

| Treatments | Dose (g or ml/l) | Powdery mildew on leaves (Mean PDI) | |
|---|---|---|---|
| | Adjuvant | After 10 weeks | After 12 weeks |
| V1 | Adsee AMP40 | 2.56 | 5.19 |
| V7 | Untreated control | 12.94 | 17.81 |

Clearly, V1, according to the disclosure, had improved efficacy of the fungicide, while it also has a better ecotoxicity profile.

The evaluation of the bio-efficacy of "Adjuvants" with fungicide against powdery mildew on leaves of grapes of Table 5 was repeated with dimethomorph as the fungicide. Dimethomorph (0.05g active material) was used with 1 ml adjuvant per liter of spray solution.

**Table 7. Bio-efficacy of "Adjuvants" used with dimethomorph against powdery mildew on leaves of grapes**

| Treatments | Adjuvant | Powdery mildew on leaves (Mean PDI) | |
|---|---|---|---|
| | | After 10 weeks | After 12 weeks |
| W1 | Adsee AMP40 | 2.94 | 4.31 |
| W7 | Untreated control | 12.94 | 17.81 |

Clearly, W1, according to the disclosure, had improved efficacy of the fungicide, while it also has a better eco toxicity profile.

The evaluation of the bio-efficacy of "Adjuvants" with fungicide against powdery mildew on leaves of grapes of Table 5 was repeated with a mixture of fluopyram and tebuconazole (equal amounts by weight) as the fungicide. Fungicide (total amount of active matter of 0.56 g) was combined with 1 ml of adjuvant per liter of spray solution.

**Table 8. Bio-efficacy of "Adjuvants" used with mixture of fluopyram and tebuconazole against powdery mildew on leaves of grapes**

| Treatments | Adjuvant | Powdery mildew on leaves (Mean PDI) | |
|---|---|---|---|
| | | After 10 weeks | After 12 weeks |
| Y1 | Adsee AMP40 | 2.81 | 4.06 |
| Y7 | Untreated control | 15.69 | 20.50 |

Clearly, Y1, according to the disclosure, had improved efficacy of the fungicide, while it also has a better eco toxicity profile.

In none of the tests of the examples phytotoxicity was observed, i.e., no chlorosis, burning, necrosis, epinasty or russeting was observed. Also an increase in harvestable yield was observed when a fungicide in combination with the claimed adjuvants was used.

In additional examples, the compatibility of Adsee AMP-40 in potassium glyphosate formulation and ammonium glufosinate formulations is evaluated. The following compositions are formed that include various weight percents of various pesticides along with varying amounts of the Adsee AMP-40. After formation, the appearance of the compositions was evaluated to determine clarity, wherein an appearance of "clear" is indicative of a composition that exhibits compatibility because there is no turbidity, flocculation, etc.

| | Name of Pesticide | wt% of Pesticide | wt% of Adsee AMP-40 | Appearance | Comments |
|---|---|---|---|---|---|
| X-1 | K-glyphosate (36.2% ae) | 85 | 15 | Clear < 80°C | |
| X-2 | NH4 glufosinate (50% ai) | 80 | 20 | Clear | NH4 glufosinate (50%) and Adsee AMP-40 are mutually soluble at all ratios. |
| X-3 | NH4 glufosinate powder (95%) | 50 | 50 | Clear (0 - 70°C) | 0 - 70°C Clear |
| X-4 | NH4 glufosinate powder (95%) | 42 | 58 | Clear (-20°C to 54°C) | Clear -20°C (flowable) to 54°C |
| X-5 | Liberty 280 SL | 80 | 20 | Clear | |
| X-6 | Pelargonic acid (97%) | 17.9 | 82.1 | Clear | Adsee AMP-40 can dissolve Pelargonic acid |

The result shows that Adsee AMP-40 is compatible in potassium glyphosate formulation and ammonium glufosinate formulations. Table X-1 contains about 360 g/ae glyphosate acid equivalent (ae). Table X-3 shows that Adsee AMP-40 can solubilize 50% NH4 glufosinate. Liberty 280 SL is a commercial product containing about 25% Nh4 glufosinate, sodium laureth sulfate, and other ingredients. It shows in Table X-5 that Adsee AMP-40 is compatible with Liberty 280 SL. Table X-6 shows that Adsee AMP-40 can dissolve pesticide pelargonic acid effectively.

### Example of Adiuvancv of Adsee AMP-40 in Herbicide Formulations

A test sample containing 360 g ae/l glyphosate and 10% Adsee AMP-40 was compared to a commercial benchmark (Roundup) containing 360 g ae/l glyphosate and 10 - 15% tallowamine ethoxylate. The trial was setup as a Randomized Block Design with 4 replicas for each sample. A field of 16 m2 were prepared by ploughing and left for weeds to grow about 1-2 months. Four types of weeds were seeded including 2 annual weeds (Echinochloa colona and Eleusine indica) and 2 perineal weeds (Cyperus rotundus Linn and Imperata cylindrical). When weeds were approximately 15-30 cm height, the test sample and benchmark were applied at 3 L/ha. The spray water volume was 500 L/ha.

Efficiency of the samples was evaluated after 3, 5, 7 and 10 days by visual interpretation. The rating of the efficacy is as follows: 0 = unable to control the weeds, 1-3 = slightly under control the weeds, 4-6 = medium control the weeds, 7-9 = well control the weeds, 10 = completely control of the weeds.

The data was analyzed by Analysis of variance method (ANOVA) and compared by Duncan's Multiple Range Test (DMRT) at 95% confidence level. The result is shown in the following table.

| | Overall efficiency | | | |
|---|---|---|---|---|
| Formulation | 3 days | 5 days | 7 days | 10 days |
| RoundUp | 3.7 | 6.6 | 7.3 | 7.7 |
| Test sample with Adsee AMP40 | 6.5 | 8.6 | 8.6 | 8.8 |

This data demonstrates that Adsee AMP40 performed at least as well as the benchmark tallowamine ethoxylate as an adjuvant for glyphosate.

A test sample (Sample 1) containing 150 g/l NH4 glufosinate and 15% Adsee AMP-40 (without sodium laureth sulfate (SLES)) was compared to a commercial benchmark (BASTA) containing 150 g/l NH4 glyphosate and 42.5% sodium laureth sulfate (SLES) (Sample 2). The trial was setup in a 7.56 x 10 m plot in a corn land with 3 replicas for each sample. Various weed types were present in the plot including Amaranthus spp, Althemanthera spp, Borreria sp, Calopogonium spp, Cleome rutidospemae, Commeling benghalensi, Cynodon dactilon, Digitaria ciliaris, Galinsaga parviflora, and Rodbulia weeds. The height of the weeds were approximately 15-30 cm. The test sample and benchmark were applied at 2 L/ha. The spray water volume was 400 L/ha. The efficiency of the samples was evaluated up to 20 days. The results are set forth below:

| **Days After Application** | **Adsee AMP-40 % Weed Control Sample 1** | **BASTA + SLES % Weed Control Sample 2** |
|---|---|---|
| 1 | 0 | 0 |
| 2 | 5 | 0 |
| 3 | 10 | 5 |
| 4 | 40 | 7 |
| 5 | 50 | 30 |
| 6 | 67 | 43 |
| 7 | 83 | 57 |
| 8 | 93 | 67 |
| 9 | 90 | 75 |
| 10 | 95 | 80 |
| 11 | 90 | 85 |
| 12 | 95 | 88 |
| 13 | 95 | 93 |
| 14 | 95 | 93 |
| 15 | 95 | 98 |
| 16 | 95 | 95 |
| 17 | 95 | 100 |
| 18 | 90 | 100 |
| 19 | 90 | 100 |
| 20 | 90 | 100 |

This data demonstrates that Adsee AMP40 is able to provide similar adjuvancy to glufosinate when compared to the benchmark SLES.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration in any way. Rather, the foregoing detailed description will provide those skilled in the art with a convenient road map for implementing an exemplary embodiment. It being understood that various changes may be made in the function and arrangement of elements described in an exemplary embodiment without departing from the scope as set forth in the appended claims.

## Claims

1. An agricultural formulation comprising:
at least one agricultural active; and
an alkyl imino dipropionate having the formula: 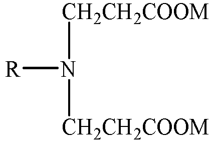
wherein R is a C6 - C24, linear or branched, alkyl group, and wherein each M is independently a cation chosen from Mg²⁺, Ca²⁺, NH₄ ⁺, K⁺, and Na⁺, and preferably each M is Na⁺, and
wherein the formulation is free of an alkylamine and/or derivative thereof if R is lauryl.

2. The formulation of claim 1 that is free of the alkylamine derivative, wherein the alkylamine derivative is the ethoxylated reaction product of a tallow- and/or coco-fatty acid with dimethylamine.

3. The formulation of claim 1 or 2 that is free of the alkylamine, wherein the alkylamine is chosen from monoethanol amine, diethanol amine, triethanol amine, polyaliphatic amines, and combinations thereof.

4. The formulation of any of claims 1 to 3 wherein R is a C8 alkyl group or a 2-ethylhexyl group, and preferably is a 2-ethylhexyl group.

5. The formulation of any of claims 1 to 4 wherein the at least one agricultural active is an herbicide.

6. The formulation of claim 5 wherein the herbicide is glyphosate, glufosinate or a combination thereof.

7. The formulation of any of claims 1 to 6 wherein the at least one agricultural active is an insecticide, a fungicide or a combination thereof.

8. The formulation of any of claims 1 to 7 wherein the at least one agricultural active is a fungicide and the fungicide is azoxystrobin.

9. The formulation of any of claims 1 to 8 further comprising a supplemental surfactant chosen from a monoglyceride, a diglyceride, and combinations thereof.

10. The formulation of claim 9 consisting essentially of the herbicide, the alkyl imino dipropionate, and the supplemental surfactant.

11. The formulation of any of claims 1 to 8 consisting essentially of the herbicide and the alkyl imino dipropionate.

12. An agricultural formulation comprising:
an herbicide chosen from glyphosate, glufosinate, and combinations thereof; and
an alkyl imino dipropionate having the formula: 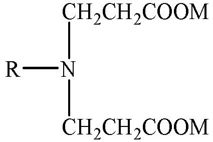
wherein R is 2-ethylhexyl and wherein each M is Na⁺.

13. The formulation of claim 12 consisting essentially of the herbicide and the alkyl imino dipropionate.

14. The formulation of claim 12 or 13 wherein the formulation is free of an alkylamine derivative that is the ethoxylated reaction product of a tallow- and/or coco-fatty acid with dimethylamine and is free of an alkylamine.

15. An agricultural formulation comprising:
azoxystrobin; and
an alkyl imino dipropionate having the formula: 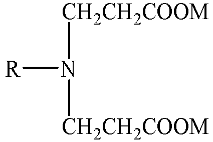
wherein R is 2-ethylhexyl and wherein each M is Na⁺.
